# EUROPEAN PATENT APPLICATION

(11) **EP 3 364 588 A1**
(43) Date of publication of application: **22.08.2018**
(21) Application number: 16877528.6
(22) Date of filing: 18.11.2016
(51) Int. Cl.: H04L 5/00, H04W 72/04

(54) **DATA TRANSMISSION METHOD, APPARATUS AND DEVICE FOR MULTI- TRANSMISSION TIME INTERVAL (TTI) SYSTEM**

(30) Priority: 26.12.2015 CN 201510999529
(71) Applicant: Huawei Technologies Co., Ltd., Longgang District Shenzhen, Guangdong 518129 (CN)
(72) Inventor: LIU, Yalin, Shenzhen Guangdong 518129 (CN); CHEN, Lei, Shenzhen Guangdong 518129 (CN)
(74) Representative: Pfenning, Meinig & Partner mbB
(86) International application number: PCT/CN2016/106459
(87) International publication number: WO 2017/107717

(57) **Abstract**

Embodiments of the present invention provide a data transmission method for a multi-transmission time interval TTI system, including: generating a data frame including a self-contained self-contained feedback; and transmitting the data frame on a plurality of subbands obtained by dividing one carrier, where at least two of the plurality of subbands have different TTIs; and parameters of self-contained feedbacks of the at least two of the plurality of subbands are the same, and time lengths of self-contained feedbacks of the plurality of subbands are the same. By configuring a self-contained feedback across subbands, a problem of excessively low resource utilization of self-contained feedbacks resulting from different TTIs and waveform parameter configurations of the subbands can be resolved. According to the embodiments of the present invention, resource utilization of the self-contained feedback can be improved.

## Description

### TECHNICAL FIELD

The present invention relates to the field of communications technologies, and in particular, to a data transmission method, apparatus, and device for a multi-transmission time interval TTI system.

### BACKGROUND

Development of mobile communications technologies and especially use of intelligent terminals greatly promote development of mobile networks. Accordingly, a demand for broadband mobile networks keeps growing, and such growth is continuing. It is predicted that 50 billion or more machine type communication (English: Machine Type Communication, MTC for short) devices will be connected to networks in the future. Currently, smart hardware is developing. Smart bands, smartwatches, smart meters, and the like are gradually accepted and used. It can be predicted that such machine type communication or machine to machine communication (English: Machine to Machine, M2M for short) will become more common in the future, and impose higher communication requirements on future mobile networks.

In consideration of a wide variety of MTC or M2M and further growing requirements for mobile bandwidth in the future, requirements on future 5G mainly include three aspects: enhanced mobile broadband (English: enhanced Mobile Broadband, eMBB for short), requirements for MTC communication, and ultra-high-reliability and ultra-low-latency communication. A peak rate of eMBB will be 10 to 100 times that of Long Term Evolution technology (English: Long Term Evolution, LTE for short). Spectral bandwidth definitely needs to be increased to satisfy requirements of high bandwidth. Therefore, the future 5G will have larger spectral bandwidth. For requirements of ultra-low latency, an objective discussed in the industry at present is to satisfy a requirement that feedback latency of air interface transmission is 1 ms. That is, after receiving schedule signaling, a terminal is required to perform hybrid automatic repeat request (English: Hybrid Automatic Repeat Request, HARQ for short) feedback transmission within time less than or equal to 0.5 ms. Alternatively, a terminal is required to perform transmission and receive a HARQ feedback from a base station within time less than or equal to 0.5 ms.

The future 5G can adapt to various service requirements. To satisfy diverse service requirements, in terms of technology, 5G needs to flexibly support different services and adapt to potential service requirements in the future. Therefore, 5G needs to be highly flexible in terms of technology. For example, there are mobile services of high-speed mobility (500 km/h) and relatively static services. Waveforms of 5G air interfaces need to adapt to changes of different services. Therefore, the future 5G needs to support different transmission time intervals (English: Transmission Time Interval, TTI for short) on one carrier to satisfy requirements of different services. That is, different waveforms can be used on one carrier to adapt to transmission of different services.

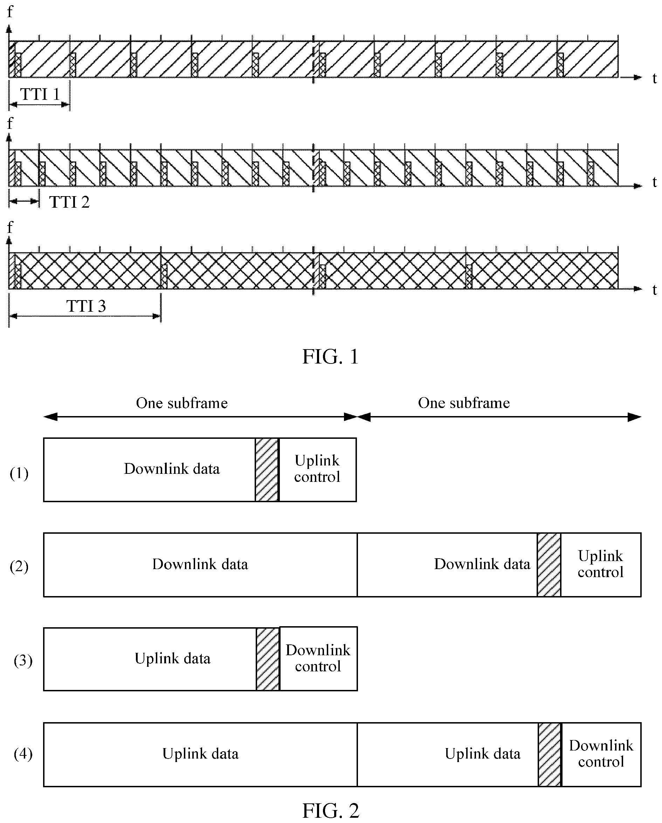

A method for adaptive TTIs is disclosed in the prior art to adapt to requirements of various services in the future. Some services require relatively low transmission latency, and some services have relatively long TTIs in transmission due to high-speed mobility. A typical multi-TTI frame structure is shown in FIG. 1.

In the frame structure shown in FIG. 1, one frequency band is divided into a plurality of subbands or carriers. A frame structure having a TTI of a length is transmitted on each subband. As shown in FIG. 1, three different TTIs are supported. Generally, a terminal is notified, by using a system broadcast message, of information about a TTI supported in a system. Generally, a notification message is sent on only one subband. Therefore, one subband is used to send a downlink broadcast message. The subband is referred to as a common subband, and is mainly used to send a downlink broadcast message, etc, such as an MIB and a SIB. Similarly, to save random access resources, a random access resource is not defined on every subband, and the random access resource may be defined on the common subband. However, for a service that a user may actually transmit, different TTIs need to be used for transmission, the user needs to be scheduled from the common subband to a subband with a specific TTI. Therefore, how to schedule a user from a common subband to a subband with a specific TTI during random access needs to be considered.

### SUMMARY

Embodiments of the present invention provide a data transmission method, apparatus, and device for a multi-transmission time interval TTI system, to resolve, by configuring a self-contained feedback across subbands, problems of difficulty in configuring parameters of self-contained feedbacks and excessively high overheads resulting from different TTIs of the subbands, so that system resources can be fully utilized. To achieve the foregoing objective, the following technical solutions are used in the embodiments of the present invention.

According to a first aspect, an embodiment of the present invention provides a data transmission method for a multi-transmission time interval TTI system, including:
generating a data frame including a self-contained self-contained feedback; and
transmitting the data frame on a plurality of subbands obtained by dividing one carrier, where
at least two of the plurality of subbands have different TTIs; and
parameters of self-contained feedbacks of the at least two of the plurality of subbands are the same, and time lengths of self-contained feedbacks of the plurality of subbands are the same.

With reference to the first aspect, in a first possible implementation of the first aspect, the data transmission method further includes:
transmitting parameter configuration signaling of the self-contained feedback; and
configuring a parameter of the self-contained feedback based on the parameter configuration signaling.

According to a second aspect, an embodiment of the present invention provides a data transmission apparatus for a multi-transmission time interval TTI system, including:
a generation module, configured to generate a data frame including a self-contained self-contained feedback; and
a transmission module, configured to transmit the data frame on a plurality of subbands obtained by dividing one carrier, where
at least two of the plurality of subbands have different TTIs; and
parameters of self-contained feedbacks of the at least two of the plurality of subbands are the same, and time lengths of self-contained feedbacks of the plurality of subbands are the same.

With reference to the second aspect, in a first possible implementation of the second aspect, the data transmission apparatus further includes:
the transmission module, further configured to transmit parameter configuration signaling of the self-contained feedback; and
a configuration module, configured to configure a parameter of the self-contained feedback based on the parameter configuration signaling.

According to a third aspect, an embodiment of the present invention provides a data transmission device for a multi-transmission time interval TTI system, including: a processor, a memory, a transceiver, and a bus, where the processor, the memory, and the transceiver are connected by using the bus to perform data transmission, and the memory is configured to store data processed by the processor;
the processor is configured to generate a data frame including a self-contained self-contained feedback; and
the transceiver is configured to transmit the data frame on a plurality of subbands obtained by dividing one carrier, where
at least two of the plurality of subbands have different TTIs; and
parameters of self-contained feedbacks of the at least two of the plurality of subbands are the same, and time lengths of self-contained feedbacks of the plurality of subbands are the same.

With reference to the third aspect, in a first possible implementation of the third aspect, the transceiver is further configured to transmit parameter configuration signaling of the self-contained feedback;
the processor is further configured to configure a parameter of the self-contained feedback based on the parameter configuration signaling.

With reference to the first aspect, the second aspect or the third aspect, in the embodiments of the present invention, further descriptions are provided as follows:

The data frame may represent a data resource that has a particular transmission time length in a fullband. It should be noted that the transmission time length of the data frame is not limited in the embodiments of the present invention. For example, the transmission time length may be 1 ms or 10 ms, which needs to be determined based on an actual case. Further, each data frame may include odd-numbered symbols. In addition, the self-contained feedback included in the data frame the data frame may be a data resource that is in the data resource and that is used to provide a feedback. For example, a part other than the self-contained feedback in the data frame is used to send downlink data. The self-contained feedback may be used to provide an uplink feedback (may be used to feed back an uplink control signal). Otherwise, the self-contained feedback may be used to provide a downlink feedback.

Optionally, the data frame may include one or more self-contained feedbacks. That is, a plurality of self-contained feedbacks may be set in the data frame.

Optionally, the parameter configuration signaling carries an index indicating the parameter of the self-contained feedback, where different indexes indicate different parameters of the self-contained feedback.

Optionally, the parameter configuration signaling of the self-contained feedback is delivered by using a system broadcast or dedicated configuration signaling or dynamic configuration signaling. The dedicated configuration signaling may be RRC signaling, MAC layer signaling, or the like. The dynamic configuration signaling may be physical layer control signaling.

Optionally, the dynamic configuration signaling is control signaling of each of the plurality of subbands. A parameter of the self-contained feedback of each of the plurality of subbands is separately configured by using control signaling of each of the plurality of subbands. The parameter of the self-contained feedback may be flexibly configured by using the dynamic configuration signaling.

Optionally, the parameter of the self-contained feedback includes at least one of the following: a start position, a bandwidth, a configuration interval indication, a reference waveform parameter of the self-contained feedback, and a waveform parameter configuration of a part that is in a symbol whose length is greater than a reference symbol length and that is not occupied by the self-contained feedback.

Optionally, at least two of the at least two subbands are adjacent subbands. That is, at least two of subbands having a same parameter of the self-contained feedback are adjacent subbands.

Optionally, if one symbol of one of the plurality of subbands is not entirely occupied by the self-contained feedback, a remaining part of the symbol may be scheduled for transmitting data. Further, the remaining part of the symbol may use a waveform parameter of a subband having a relatively short TTI.

According to a fourth aspect, an embodiment of the present invention provides a use method of a self-contained feedback, including: receiving, by user equipment UE, information about a time frequency resource used by a self-contained feedback sent by a network side, where a subband occupied by the time frequency resource may be different from a subband on which the UE sends a data frame; and
providing, by the UE, the self-contained feedback on the time frequency resource.

With reference to the fourth aspect, in a first possible implementation of the fourth aspect, before the receiving, by UE, information about a time frequency resource used by a self-contained feedback sent by a network side, the use method further includes: receiving, by the UE, parameter configuration signaling of the self-contained feedback; and configuring, by the UE, a parameter of the self-contained feedback based on the parameter configuration signaling.

In the embodiments of the present invention, in a case of multi-TTI subbands, a frame structure that is across the subbands and that includes a self-contained feedback is designed, so that problems of difficulty in configuring parameters of self-contained feedbacks and excessively high overheads resulting from different TTIs of the subbands can be resolved. By configuring a self-contained feedback across subbands, a problem of excessively low resource utilization of self-contained feedbacks resulting from different TTIs and waveform parameter configurations of the subbands can be resolved. According to the embodiments of the present invention, resource utilization of the self-contained feedback can be improved.

A person of ordinary skill in the art will understand these and other objectives and advantages of various embodiments of the present invention after reading detailed descriptions of the embodiments shown in the following accompanying drawings.

### BRIEF DESCRIPTION OF DRAWINGS

The accompanying drawings are incorporated in this specification and constitute a part of this specification. Same numerals depict same elements. Embodiments of the present invention are described with reference to the accompanying drawings. The accompanying drawings and the described content are used together for explaining the principle of the present invention.
FIG. 1 shows a typical multi-TTI frame structure;
FIG. 2 is a schematic diagram of two frame structures each carrying a self-contained feedback;
FIG. 3 is a schematic diagram of a multi-TTI frame structure according to an embodiment of the present invention;
FIG. 4 is a schematic diagram of a frame structure based on F-OFDM;
FIG. 5 is a schematic diagram of a self-contained feedback configured by using symbols corresponding to a short TTI as a reference;
FIG. 6 is a schematic diagram of a self-contained feedback configured by using symbols corresponding to a long TTI as a reference;
FIG. 7 is a schematic diagram of a frame structure that is of a self-contained feedback and that is based on F-OFDM according to an embodiment of the present invention;
FIG. 8 is a schematic diagram of various configurations of self-contained parameters;
FIG. 9 is a schematic diagram of two self-contained timeslots included in each millisecond;
FIG. 10 is a schematic diagram of a self-contained feedback configured by using a subband with a maximum subcarrier interval as a reference;
FIG. 11 is a schematic diagram of a configuration of a self-contained feedback using a symbol whose subcarrier interval is 16.875 KHz as a reference;
FIG. 12 is a schematic diagram of a frame structure of a self-contained feedback that does not include a GP according to an embodiment of the present invention;
FIG. 13 is a schematic diagram of a self-contained feedback configured by using a common carrier interval configuration;
FIG. 14 is a schematic diagram of using a waveform of eMBB as a configuration reference of a self-contained feedback;
FIG. 15 is a schematic flowchart of configuring a self-contained feedback according to an embodiment of the present invention;
FIG. 16 is a schematic flowchart of configuring another self-contained feedback according to an embodiment of the present invention;
FIG. 17 shows a data transmission apparatus for a multi-transmission time interval TTI system according to an embodiment of the present invention; and
FIG. 18 shows a data transmission device for a multi-transmission time interval TTI system according to an embodiment of the present invention.

### DESCRIPTION OF EMBODIMENTS

Various embodiments of the present invention are described in detail, and examples of the present invention are shown in the accompanying drawings. Although descriptions are provided with reference to these embodiments, it may be understood that these embodiments are not used to limit the present invention. On the contrary, disclosure of the present invention intends to cover alternative technologies, modifications, and equivalent technologies that may fall within the spirit and scope of the present invention that are defined in the appended claims. In addition, many specific details are described in the following detailed descriptions of the present invention to provide thorough understanding of the present invention. However, it may be understood that during actual application, these specific details of the present invention may be not included. Well-known methods, procedures, components, and circuits are not described in detail in other examples, so as to avoid unnecessary ambiguity in various aspects of the present invention.

A self-contained (English: self-contained) feedback is an uplink feedback resource or a downlink feedback resource configured at a tail of each subframe or several consecutive subframes (as a whole) on a downlink or an uplink of time division multiplexing time division duplexing (English: Time Division Duplexing, TDD for short). The feedback resource is a time frequency resource, that is, one symbol or several symbols occupying a particular bandwidth. The feedback resource may be mainly used to feed back an ACK/NACK of a HARQ. A TDD system is considered, and the feedback resource may be needed on the uplink and the downlink. In the embodiments of the present invention, a self-contained feedback may be referred to as self-contained or a timeslot or a self-contained timeslot. Unless otherwise specifically stated, a self-contained feedback in the embodiments of the present invention is one or more symbols configured at the tail of each subframe or several consecutive subframes on the downlink or the uplink of TDD. The one or more symbols are a part of a current subframe or the last subframe of the several consecutive subframes.

FIG. 2 is a schematic diagram of two frame structures each carrying a self-contained feedback. As shown in FIG. 2, there are mainly two ideas for implementing the self-contained feedback. In one idea, one or more uplink ACK/NACK symbols are included in a rear of each subframe. In the other idea, the self-contained feedback is set to be configurable, and a plurality of subframes may include one or more symbols for transmitting a self-contained feedback. A guard period (for example, a shadowed part shown in FIG. 2) is set between a self-contained feedback and downlink data. In addition, the self-contained feedback may be an uplink feedback (for example, an uplink control part in FIG. 2) or a downlink feedback (for example, a downlink control part in FIG. 2). Unless otherwise specifically state, this is not limited in the embodiments of the present invention.

In the foregoing implementations, it is mainly considered to add a feedback resource at a tail of a unified frame structure. However, a case in which one carrier supports a plurality of different TTIs is not considered. Especially, in a scenario of applying Filtered Orthogonal Frequency Division Multiplexing (English: Filtered Orthogonal Frequency Division Multiplexing, F-OFDM for short), how to provide a self-contained feedback needs to be considered. Different TTIs mean that one carrier is divided into a plurality of subbands (each subband occupies a part of a frequency band of the carrier) to adapt to services, so that the subbands use different waveform parameters (for example, subcarrier intervals, cyclic prefixes (English: Cyclic Prefix, CP for short) length, and TTI lengths). Therefore, different subbands have different transmission time intervals, to satisfy requirements of transmission time intervals of different services. Generally, a long TTI is used for transmission of a Multimedia Broadcast Multicast Service (English: Multimedia Broadcast Multicast Service, MBMS for short) service, and a short TTI is used for an ultra-low-latency and high-speed-transmission service.

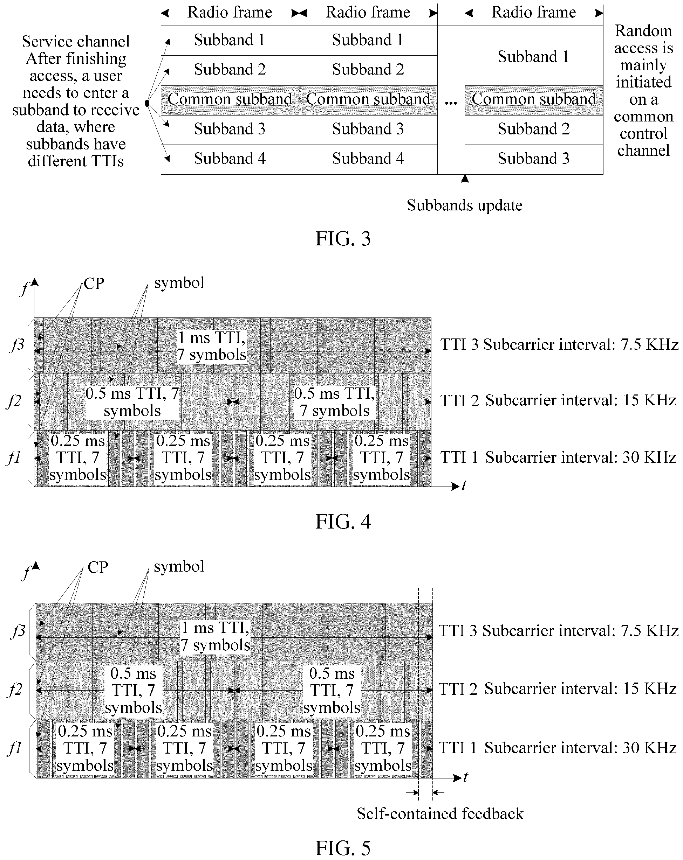

In a future communications system, a carrier may be divided into a plurality of subbands. The subband may have different TTI lengths. Different TTI lengths adapt to requirements of different types of services. FIG. 3 is a schematic diagram of a multi-TTI frame structure. As shown in FIG. 3, a carrier or a channel is divided into a plurality of subbands (for example, including subbands 1 to 4 and a common subband). The subbands may have different TTIs, and random access is mainly initiated on the common subband.

To adapt to flexible TTIs based on F-OFDM, a self-contained feedback may enable each subband (all subbands) or several subbands to have a consistent waveform parameter of the self-contained feedback, to simplify a system and improve spectrum utilization.

FIG. 4 is a schematic diagram of a frame structure based on F-OFDM. As shown in FIG. 4, each of the subbands corresponding to a TTI 1, a TTI 2, and a TTI 3 may include a plurality of subcarriers. Subcarrier intervals of the three subbands may be respectively 30 KHz, 15 KHz, and 7.5 KHz. When different subcarrier intervals are used, the quantities of symbols included in the TTIs are different. Lengths of the TTIs are only examples, and other lengths may be used. TTIs of 0.25 ms, 0.5 ms, and 1 ms are used in FIG. 4. It should be noted that FIG. 4 shows only an example. In practice, more or fewer subbands may be included, and subcarrier intervals may have other values. Differences in these parameters do not affect method implementations of the embodiments of the present invention.

In a frame structure based on F-OFDM, to implement a self-contained feedback, symbols reserved for self-contained by different TTIs need to be considered to make full use of the symbols on the different TTIs. The frame structure shown in FIG. 4 is an example. It is assumed that one self-contained timeslot is configured in each millisecond. It needs to be considered to use symbols corresponding to which TTI as a reference for configuration (for example, it needs to be considered to use symbols corresponding to the TTI 1 as a reference or to use symbols corresponding to the TTI 2 or the TTI 3 as a reference). It is assumed that the symbols corresponding to the TTI 1 are used as a reference. FIG. 5 is a schematic diagram of a self-contained feedback configured by using symbols corresponding to a short TTI as a reference. As shown in FIG. 5, the symbols corresponding to the TTI 1 are used as a reference to configure the self-contained feedback. That is, a timeslot having the length of the TTI 1 is configured as the self-contained feedback. For the symbols corresponding to the TTI 2 or the TTI 3, a part of the last symbol at tails of the symbols is occupied, and the symbol can no longer be used. In this case, the last symbol is wasted. Especially, for the TTI 3, a severe waste occurs. One of seven symbols in 1 ms is no longer usable. For the TTI 2, one of 14 symbols is no longer usable. If two self-contained timeslots need to be configured in 1 ms, a more severe waste of resources is caused.

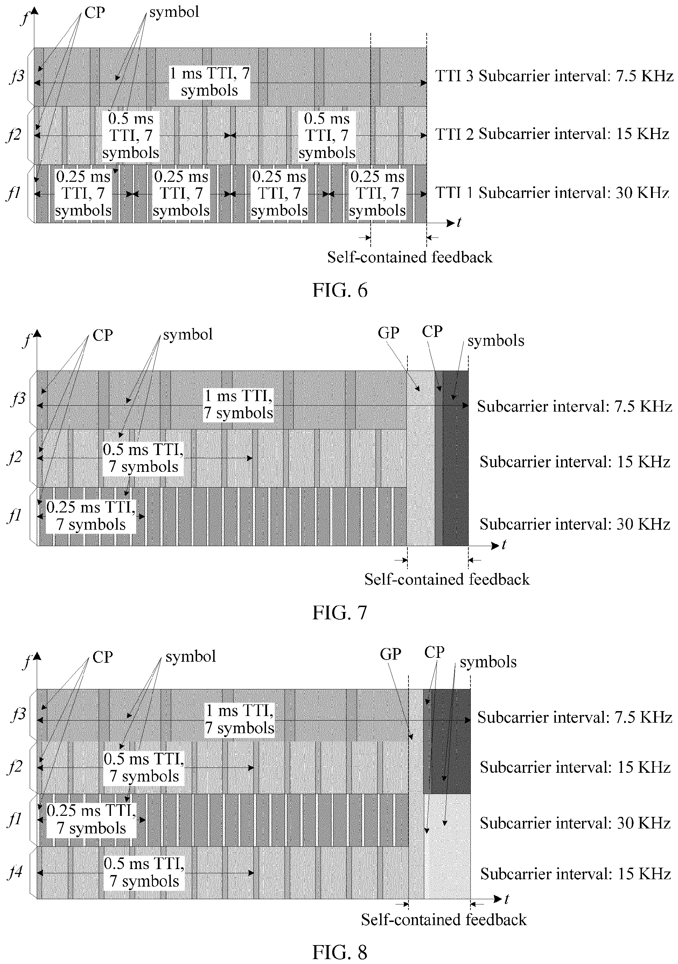

If symbols corresponding to a long TTI are used as a reference for configuration and in consideration of that TTI lengths may have a multiple relationship, one symbol or several symbols in each subband are entirely included in a self-contained timeslot. For a short TTI, more symbols are included. FIG. 6 is a schematic diagram of a self-contained feedback configured by using symbols corresponding to a long TTI as a reference. As shown in FIG. 6, a TTI of 0.25 ms includes four symbols for a self-contained feedback. If there are not so many uplink feedbacks, a waste of resources is caused. Therefore, it is very important to appropriately configure self-contained because spectrum utilization can be improved.

### Embodiment 1

This embodiment of the present invention provides a frame structure that can better support a fast self-contained feedback based on F-OFDM. The self-contained feedback in this embodiment of the present invention may be included in an uplink subframe or a downlink subframe.

In a method according to this embodiment of the present invention, based on F-OFDM, a carrier is divided into different subbands. The subbands use different TTIs. That is, different subbands have different waveform parameters. The waveform parameters include a subcarrier interval, a CP length, a symbol length, a quantity of symbols, and the like. To better support a self-contained feedback based on F-OFDM, a same self-contained feedback is configured on all subbands, instead of keeping self-contained feedbacks of all subbands independent of each other.

FIG. 7 is a schematic diagram of a frame structure that is of a self-contained feedback and that is based on F-OFDM. As shown in FIG. 7, a guard period (English: Guard Period, GP for short) is used for protection from a downlink to an uplink, to prevent transmission in the uplink from interfering with the downlink. A base station (or a network node) controls a transition from an uplink to a downlink, and a GP may not be needed. A size of a GP depends on a cell radius. When the cell radius is relatively small, the GP may be set to be relatively small. A same self-contained feedback is configured on all subbands. For a subband, a self-contained feedback may include one or more symbols, which depends on a waveform parameter and a time length configured for the self-contained feedback. In an LTE system, a minimum length of the GP is approximately 59.4 µs. A length (including a CP) of one symbol whose subcarrier interval is 15 KHz is 71.43 µs. Therefore, one GP basically occupies nearly the length of one symbol whose subcarrier interval is 15 KHz. In consideration of that a future communications system supports a cell radius equal to that in LTE, a length of at least two symbols whose subcarrier interval is 15 KHz needs to be occupied to configure one self-contained timeslot. In consideration of that one carrier in a 5G communications system may have very large bandwidth. Therefore, system implementation may be relatively complex according to the foregoing method. It should be noted that a carrier in this embodiment of the present invention is a continuous spectrum. A part of a frequency band of a carrier is referred to as a subband. For example, a frequency band indicated by f3 is a subband.

In this embodiment of the present invention, several subbands may be combined to configure a same self-contained parameter, and self-contained parameters of other subbands may be the same as or different from the self-contained parameter. FIG. 8 is a schematic diagram of various configurations of self-contained parameters. As shown in FIG. 8, the self-contained parameters may be configured to be a plurality of different parameters. However, a plurality of self-contained having configurations of different parameters have aligned time lengths. For example, self-contained parameter configurations of subbands corresponding to f3 and f2 in FIG. 8 are the same. Self-contained parameter configurations of subbands corresponding to f1 and f4 are the same. The self-contained parameter configurations of the subbands corresponding to f1 and f2 are different. When subbands are obtained through division to configure a self-contained parameter, implementation complexity such as system scheduling complexity and terminal implementation complexity can be reduced. The reduction in implementation complexity is mainly reflected in a reduction in hardware implementation complexity. Because during implementation of large bandwidth, for example, a current hardware level cannot support a bandwidth of 100 M, let alone a bandwidth of 200 M. After division into subbands, the bandwidth is reduced, and hardware implementation becomes easy. In another aspect, from a perspective of a scheduling algorithm, algorithm complexity is reduced because scheduling of a larger bandwidth requires a more complex algorithm and has lower performance.

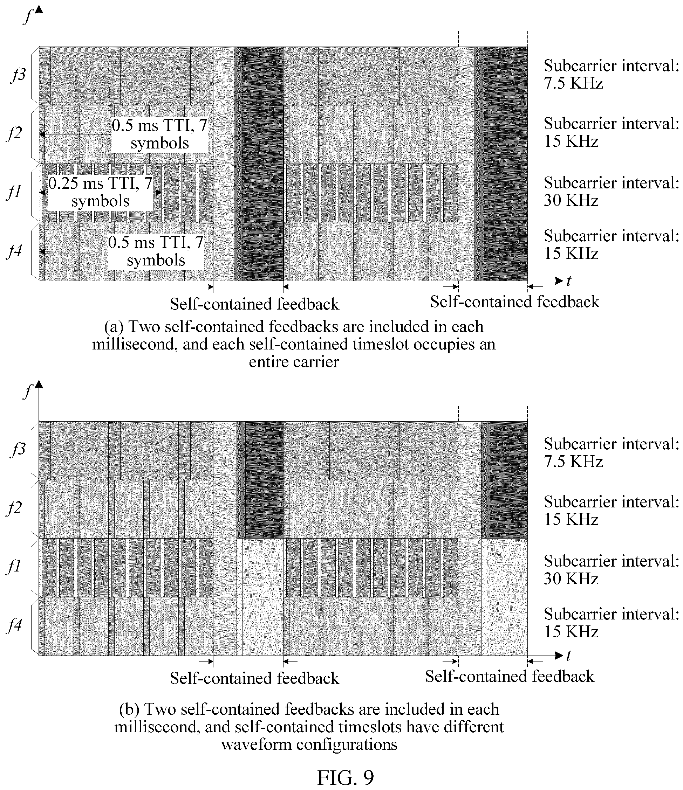

The foregoing describes a case in which one self-contained timeslot is included in each millisecond. FIG. 9 is a schematic diagram of two self-contained timeslots included in each millisecond. As shown in FIG. 9, symbols whose subcarrier interval is 15 KHz are used as a reference for configuring a self-contained timeslot. In this case, a quantity of symbols included in each millisecond in a subband whose subcarrier interval is 7.5 KHz in FIG. 9 is an odd number (for example, there are seven symbols in FIG. 9). Therefore, the third symbol and the fourth symbol are separately cut by a self-contained timeslot. As a result, two symbols in the middle are no longer usable. It can be learned from FIG. 9 that, in a subband whose subcarrier interval is 7.5 KHz, the self-contained timeslot occupies a tail of the third symbol and a head of the fourth symbol. Therefore, remaining parts of the two symbols can no longer be used to transmit data.

Symbols whose subcarrier interval is 15 KHz are used as a reference for configuring a self-contained timeslot. If a communications system mainly supports three waveform parameter configurations whose subcarrier intervals are 7.5 KHz, 15 KHz, and 30 KHz. The three waveform parameter configurations are shown in Table 1:

**Table 1 Table showing three waveform parameter configurations**

| Subcarrier interval | Symbol length (including CP) | Quantity of symbols/ms | TTI (ms) |
|---|---|---|---|
| 7.5 KHz | 142.86 µs | 7 | 1 |
| 15 KHz | 71.43 µs | 14 | 0.5 |
| 30 KHz | 35.71 µs | 28 | 0.25 |

It can be learned from Table 1 that, if a length of a self-contained timeslot is a length of one symbol whose subcarrier interval is 7.5 KHz, 15 KHz has two symbol lengths for self-contained transmission, and 30 KHz has four symbol lengths for self-contained transmission. If two self-contained timeslots are included in each millisecond, 3/7 (approximately, 42.86%) of the resources are used to provide a self-contained feedback. As a result, transmission efficiency of an entire system is very low. In consideration of that a symbol whose subcarrier interval is 7.5 KHz is mainly used for transmission of an MBMS or a coordinated multi point (English: Coordinated Multi Point, CoMP for short) service. Therefore, a self-contained feedback is not needed in every subframe. If a symbol is used to provide a self-contained feedback, a subframe corresponding to the symbol is not used to transmit data. That is, data transmission is controlled in a time domain, to provide a self-contained feedback. A symbol whose subcarrier interval is 15 KHz is generally used for transmission of a mobile data service. Therefore, in a possible manner, two symbols whose carrier interval is 15 KHz are used as a reference to provide a self-contained feedback. A typical configuration in which one self-contained timeslot is included in each millisecond is shown in FIG. 7 or FIG. 8. Two self-contained timeslots are included in each millisecond, as shown in FIG. 9. It can be learned from FIG. 9 that, in a subband whose subcarrier interval is 7.5 KHz, the first self-contained timeslot separately occupies the tail of the third symbol and the head of the fourth symbol. As a result, the third symbol and the fourth symbol cannot be fully used.

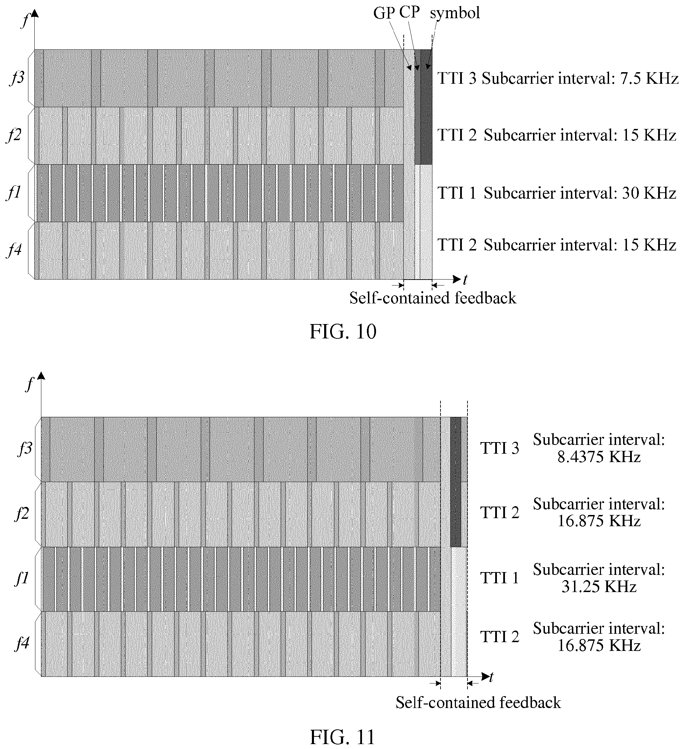

To reduce overheads resulting from the foregoing self-contained feedback, there may be several methods as follows:
Method 1: Symbols whose subcarrier interval is 7.5 KHz in FIG. 9(b) are used as an example. If a self-contained timeslot just occupies a part of a symbol, a blank symbol (English: Blank symbol) method may be used. That is, a current truncated symbol is excluded (that is, no data is transmitted on a subcarrier in which the truncated subband is located). This means that the symbol can no longer be used, resulting in a waste of transmission resources. To fully use transmission resources, a different waveform may be used to perform transmission on a part that is of the symbol and that is not covered by the self-contained timeslot. For example, a waveform corresponding to a subcarrier having an interval of 15 KHz is used to perform transmission. Because a symbol whose subcarrier interval is 7.5 KHz is mainly used for transmission of an MBMS or a CoMP, a changed waveform may fail to satisfy a service transmission requirement (because a CP becomes shorter). Therefore, it may be considered to use this part of resource to perform data transmission on another subband (for example, a subband having a larger subcarrier interval or an adjacent subband). As shown in FIG. 9, this part of resource may be used to perform transmission on a subband whose subcarrier interval is 15 KHz.
Method 2: A subband with a maximum subcarrier interval of a current carrier is used as a reference to configure a self-contained timeslot, so that overheads occupied by a self-contained feedback can be minimized. FIG. 10 is a schematic diagram of a self-contained feedback configured by using a subband with a maximum subcarrier interval as a reference. As shown in FIG. 10, a subcarrier interval is used as a reference to configure a self-contained feedback. In this case, overheads caused by the self-contained feedback are minimal. In consideration of that a GP of 18 µs needs to be ensured for a relatively small cell radius, and one transition from an uplink to a downlink takes at least approximately 17 µs. Therefore, to keep a waveform of a self-contained timeslot unchanged, one self-contained timeslot needs to occupy a length of at least two symbols (the symbol whose subcarrier interval is 30 KHz). When a minimum symbol length (or a maximum subcarrier interval) is used as a reference, the last symbol of a TTI 3 is truncated. In consideration of that the self-contained feedback is mainly used to resolve ultra-low-latency transmission and a data packet of this transmission type is usually very short, a packet may be parsed out when a GP of a current subframe ends, and a feedback is provided in the current subframe. Based on this assumption, a requirement can be satisfied by configuring one self-contained timeslot in each millisecond. Certainly, if decoding cannot be completed in the current subframe, two self-contained timeslots need to be configured in each millisecond, as shown in FIG. 9.

In addition, a general self-contained timeslot includes three parts of a GP, a CP, and a symbol (English: symbol). Optionally, a GP is needed when a transition from a downlink to an uplink is considered, and a GP is not needed in a transition from an uplink to a downlink. Because user equipments (English: User Equipment, UE for short) are at different distances from a base station, if UE close to a base station starts uplink transmission upon downlink reception whereas UE far away from the base station has not finished reception, interference occurs. Therefore, a GP is needed to reduce such interference. The base station takes control from the uplink to the downlink, and the base station controls all UEs. Therefore, a GP is not needed.

Similarly, to fully use a transmission resource of the TTI 3, a waveform of a TTI 1 (or a waveform of a shortest TTI) is used in a part that is of the last symbol of the TTI 3 and that is not occupied to perform transmission. It should be noted that, the last symbol of a subband in this embodiment of the present invention is only the last symbol among symbols in 1 ms in the figures or in a consideration range (in a unit time). When the consideration range multiplies (for example, is 10 ms), the last symbol may exist in each unit time.

When a symbol of a shortest TTI (that is, a maximum subcarrier interval) is used as a reference to configure a self-contained feedback and when one self-contained timeslot is configured in each millisecond, 1/14 (approximately, 7.14%) of a transmission resource is occupied. If decoding cannot be completed before a GP ends, at least two self-contained timeslots need to be configured in each millisecond. It can be learned from FIG. 9 that, when a frame structure having a subcarrier interval of 15 KHz is used as a reference, consequently, resources in a subband whose subcarrier interval is 7.5 KHz cannot be desirably used. Especially, the third symbol and the fourth symbol are truncated. Therefore, it may be considered that a quantity of symbols included in each millisecond is 2ⁿ (n=0, 1, 2, 3, 4, ...). Processing in the entire system becomes relatively simple. Table 2 is a table showing three waveform parameter configurations. As shown in Table 2:

**Table 2 Table showing three waveform parameter configurations**

| Subcarrier interval | Symbol length (including CP) | Quantity of symbols/ms | TTI (ms) |
|---|---|---|---|
| 8.4375 KHz | 125 µs | 8 | 1 |
| 16.875 KHz | 62.5 µs | 16 | 0.5 |
| 33.75 KHz | 31.25 µs | 32 | 0.25 |

FIG. 11 is a schematic diagram of a configuration of a self-contained feedback using a symbol whose subcarrier interval is 16.875 KHz as a reference. As shown in FIG. 11, based on Table 2, for example, one self-contained timeslot is included in 1 ms. The self-contained timeslot in FIG. 11 includes time of two symbols whose subcarrier interval is 33.75 KHz (including a GP, a CP, and a symbol length). In consideration of that time of a symbol of one TTI 1 is 31.25 µs, a cell radius that can be supported has a limited range (approximately, a radius of 9.3 km). In consideration of a 5G high-density deployment scenario, a cell radius of 4.2 km can basically satisfy a requirement. It can also be learned from FIG. 11 that, overheads of the self-contained timeslot are 2/32 (approximately, 6.25%), and are relatively low. Symbols of a TTI 2 are just used up, and one symbol of a TTI 3 is truncated. Therefore, in a part that is of the symbol and that is not occupied, a blank symbol may be used or a waveform of the TTI 2 or the TTI 1 may be used to transmit data. Therefore, it is more appropriate to use a design of a frame structure having 2ⁿ (n=0, 1, 2, 3, 4, ...) symbols in each millisecond to provide a self-contained feedback.

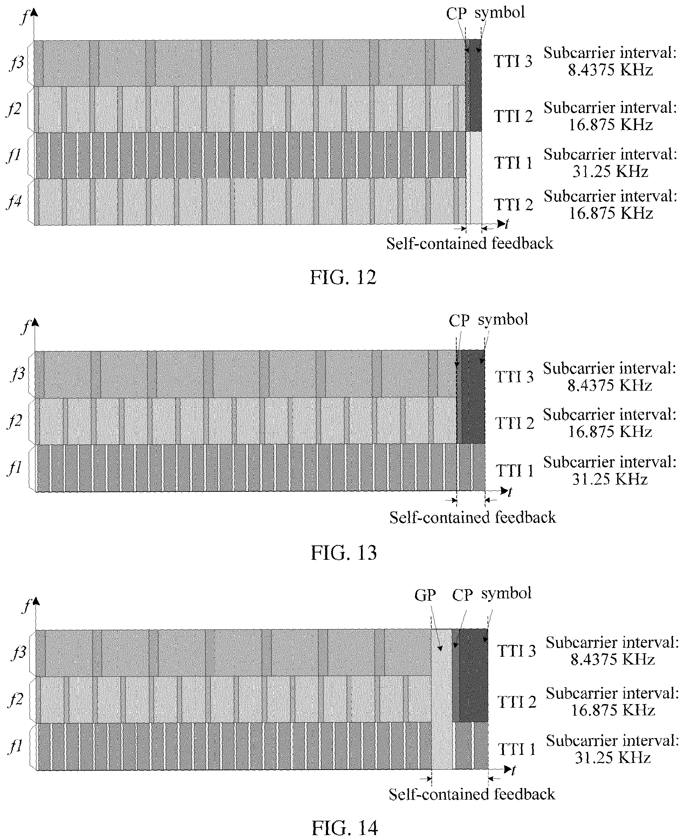

It should be noted that a GP needs to be configured in a transition from a downlink to an uplink, and a GP may be not needed in a transition from an uplink to a downlink. Therefore, such overheads can be reduced. In consideration of that ultra-low latency in the future is mainly used for uplink transmission, a self-contained feedback in the uplink transmission mainly needs to be added during downlink transmission, and overheads of a GP can be reduced during uplink transmission. FIG. 12 is a schematic diagram of a frame structure of a self-contained feedback that does not include a GP according to this embodiment of the present invention. As shown in FIG. 12, the self-contained feedback includes only a CP and a symbol part but does not include a GP. However, if a length of a shortest symbol (for example, a symbol corresponding to the TTI 1) is used as a reference to configure the self-contained feedback, the last symbols of the TTI 2 and the TTI 3 are both truncated. Similarly, a blank symbol may be used or a waveform of a shortest TTI may be used to use a part that is of the last symbol and that is not occupied.

FIG. 13 is a schematic diagram of a self-contained feedback configured by using a common carrier interval configuration. As shown in FIG. 13, a configuration of a waveform corresponding to a common carrier interval, for example, a subcarrier interval of 15 KHz or 16.875 KHz, may be used to configure a self-contained timeslot. The benefit of using such a waveform configuration is that resources on large bandwidth can be fully used to transmit information. For a shortest TTI (for example, the TTI 1), a waveform of the self-contained timeslot may be kept unchanged. The common carrier interval is an existing subcarrier interval that is mainly used to transmit data, and is generally approximately 15 KHz. For example, the carrier interval is 15 KHz in LTE. Alternatively, 16.875 KHz may be used. A subcarrier having such a subcarrier interval is mainly used for transmission of eMBB.

### Embodiment 2

This embodiment of the present invention provides a frame structure of a self-contained feedback based on F-OFDM, and provides a method of using a transmission resource of a truncated symbol to configure the self-contained.

In the frame structure according to Embodiment 1, a self-contained timeslot is configured to be across a plurality of subbands or an entire carrier. When UE transmit data in the self-contained timeslot, a frequency domain resource position needs to be considered. For example, UE has limited capability and can only transmit data on a subband. Therefore, a position of a self-contained feedback corresponding to the UE needs to be kept in a same frequency domain resource of the subband. In addition, because a self-contained feedback is mainly used to provide a feedback of an ultra-low-latency service (for example, an MTC service), a data packet usually transmitted in such service is very small, and such UE may have limited bandwidth. Based on this, if a shortest TTI is used as a reference and two symbols are used as resources for a self-contained feedback, the resources may be insufficient, but truncated symbol resources in subbands having larger symbol lengths cannot be used. Moreover, to fully use other subband resources (for example, to fully use a part not occupied by a self-contained feedback), a waveform of a shortest TTI needs to be used to perform transmission. As a result, UE that performs uplink transmission on another subband needs to use a different waveform to perform uplink transmission, and consequently, system implementation is relatively complex.

FIG. 14 is a schematic diagram of using a waveform of eMBB as a configuration reference of a self-contained feedback. As shown in FIG. 14, in consideration of that a usual eMBB service has a relatively large requirement for bandwidth and UE supporting eMBB usually has a relatively strong capability and has relatively strong adaptability to frequency domains, scheduling may be performed in a relatively large frequency domain. However, if different waveforms are used in a self-contained timeslot, implementation becomes complex. Therefore, a waveform (for example, a waveform corresponding to a TTI 2 in FIG. 14) of eMBB may be used as a basis to configure a self-contained feedback. Advantages of this are as follows: First, for a short TTI, there are just an integer quantity of symbols to be used as a self-contained feedback, and a relatively large quantity of UEs can be supported. Second, a waveform parameter can be kept unchanged for a TTI 2, and a waveform of the TTI 2 can also be used for a time domain resource that cannot be used by a TTI 3. The time domain resource that cannot be used by the TTI 3 is used by using the capability of the user equipment supporting eMBB through scheduling.

Therefore, if the UE supports scheduling on relatively large bandwidth, relatively large bandwidth may be configured for the UE in the self-contained timeslot. Specifically, an implementation of the configuration is as follows:
Method 1: A resource for a self-contained feedback is notified by using downlink schedule control signaling (for example, PDCCH signaling). This method is similar to controlling allocation of uplink resources in conventional LTE by using a physical downlink control channel (English: Physical Downlink Control Channel, PDCCH for short). An advantage of the method is fast and flexible resource scheduling. However, a disadvantage is that the UE needs to keep monitoring PDCCH signaling, resulting in relatively high energy consumption. On another hand, resource scheduling using the PDCCH also leads to relatively high signaling overheads. A feedback for uplink data transmission (for example, a feedback of ACK/NACK information for uplink data) needs to be indicated by using control signaling in a self-contained feedback.
Method 2: Uplink scheduling resource information is carried in downlink data. The uplink scheduling resource information may be included in a MAC layer control element (English: Control Element, CE for short). Specifically, a feedback for the downlink data may be included in an uplink self-contained feedback. A resource for the uplink self-contained feedback is indicated by adding a MAC layer CE to the downlink data. A position of a downlink feedback for uplink data transmission may be indicated by using control signaling in the self-contained feedback.
Method 3: A resource for a self-contained feedback is semi-statically configured by using a radio resource configuration (English: Radio Resource Configuration, RRC for short). That is, once an RRC configuration is completed, a position of the resource for the self-contained feedback is relatively fixed and usually does not change unless a reconfiguration is performed. Therefore, this type of configuration is not very flexible but has relatively low signaling overheads.

It should be noted that, a method for configuring a resource for a self-contained feedback may be a combination of the foregoing several methods. For example, a semi-static configuration is used for some UEs, and a configuration using the Method 2 is used for some other UEs.

### Embodiment 3

Embodiment 1 provides a general configuration method. However, a specific configuration method is needed to configure a waveform parameter of a self-contained feedback. This embodiment of the present invention provides a method for configuring a waveform parameter of a self-contained feedback.

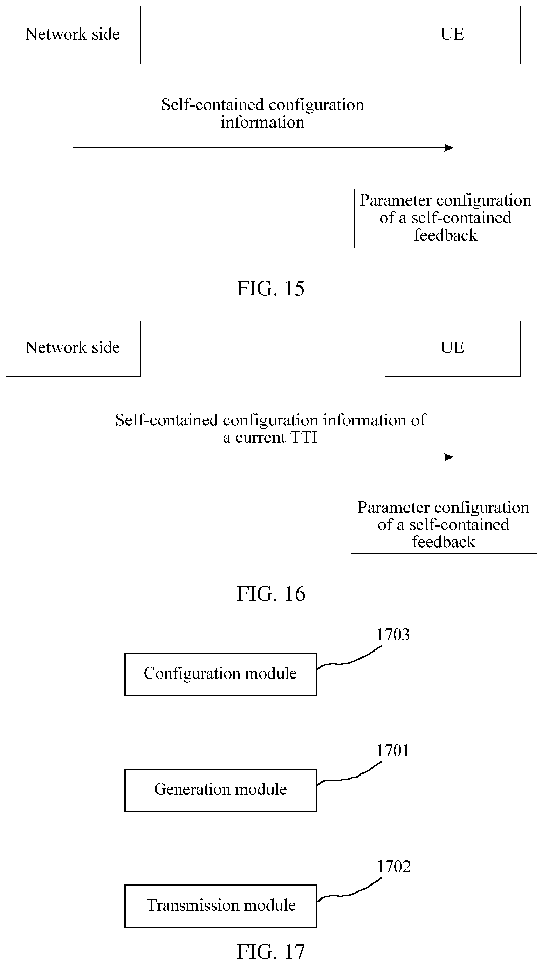

Method 1: A broadcast or an RRC dedicated configuration message is used to configure a self-contained feedback. A configuration parameter includes at least one of the following: a start position, a bandwidth (which may have a plurality of different bandwidth configurations, that is, a self-contained feedback of one carrier may be divided into several different parts, that is, self-contained feedbacks of one or more subbands are combined), a configuration interval indication (for example, once or twice in each millisecond), a reference waveform parameter (a CP length, a subcarrier interval, or a quantity of symbols) of the self-contained feedback, and a waveform parameter configuration (a CP length, a subcarrier interval, or a quantity of symbols) of a symbol (or a part that is not occupied by the self-contained feedback) whose length is greater than a reference symbol length. FIG. 15 is a schematic flowchart of configuring a self-contained feedback according to this embodiment of the present invention. As shown in FIG. 15, after receiving configuration information, UE configures a waveform of a self-contained feedback. Self-contained configuration information in the figure may be configured by using a broadcast or an RRC dedicated configuration message.

Method 2: Control signaling of each subband is used to configure a self-contained feedback. When a self-contained feedback needs to be configured, an indication is added to the control signaling for configuration. A configuration parameter includes at least one of the following: a start position, a bandwidth (a plurality of different configurations), a configuration interval indication (for example, one self-contained feedback is configured for how many symbols), and a reference waveform parameter (a CP length, a subcarrier interval, and a quantity of symbols) of the self-contained feedback. If a symbol of a current subband is cut, a transmission resource of a part that is of the symbol and that is not occupied needs to be used, and a waveform configuration parameter (a CP length, a subcarrier interval, and a quantity of symbols) of the part that is not occupied further needs to be indicated. FIG. 16 is a schematic flowchart of configuring another self-contained feedback according to this embodiment of the present invention. As shown in FIG. 16, a self-contained feedback is configured for a subband corresponding to a current TTI, so that flexible configuration can be implemented for each subband. That is, in the configuration method, dynamic configuration is performed in a subband. The dynamic configuration has an advantage of being flexible. Resource configuration is performed when there is a resource for which a feedback needs to be provided. However, a disadvantage of the dynamic configuration is that relatively high signaling overheads are needed.

Method 3: A configuration of a self-contained feedback is defined in a standard form. Waveform parameters and the like of the self-contained feedback are defined. For example, several waveform parameters and configuration intervals may be configured. However, because a subband on which configuration is performed may change, if a plurality of self-contained parameters are configured, a start position and a bandwidth of the self-contained feedback and corresponding waveform parameters further need to be notified. The start position and the bandwidth of the self-contained feedback and the corresponding waveform parameters may be notified by using a broadcast, or configured for each UE as required, or may be configured by using the dynamic configuration method in the foregoing Method 2. Specifically, waveform parameter configurations of a self-contained feedback are shown in Table 3:

**Table 3 Table showing waveform parameter configurations of a self-contained feedback**

| Index | Subcarrier interval | CP | Quantity of symbols |
|---|---|---|---|
| 1 | 15 KHz | 4.7 µs | 2 |
| 2 | 30 KHz | 3.8 µs | 4 |
| 3 | 16.875 KHz | 3.2 µs | 2 |
| 4 | 33.75 KHz | 1.6 µs | 4 |

A network side sends a parameter configuration signaling of a self-contained feedback to UE, and may add an index to the parameter configuration signaling. The index indicates a parameter configuration of the self-contained feedback. For example, indexes (1, 2, 3, 4) are used to represent four different parameter configurations of the self-contained feedback in Table 4. The parameter configuration signaling of the self-contained feedback delivered on the network side may carry only the indexes. In this way, overheads can be reduced, and system efficiency can be improved. In addition, an index may be binary, and a quantity of the indexes is not limited in this embodiment of the present invention. Indexes provided in the present invention are only an example. A waveform parameter corresponding to each index may be any other appropriate waveform parameter configurations, and essence of the present invention is not affected.

**Table 4 Table showing parameter configurations of a self-contained feedback**

| Index | Parameter configuration of a self-contained feedback |
|---|---|
| 1 | First parameter configuration |
| 2 | Second parameter configuration |
| 3 | Third parameter configuration |
| 4 | Fourth parameter configuration |

The quantity of symbols in the foregoing waveform parameters represents how many symbols are used to provide a self-contained feedback. The parameters in the table are only an example. Any configuration using a similar method may be considered as an infringement on the present invention.

During actual configuration, such a table index method may be used for Method 1 or Method 2. Only a start position (which physical resource block (English: Physical Resource Block, PRB for short)), a bandwidth (how many PRBs), and an index of each configuration needs to be configured, so that the configuration can be simplified and resource requirements can be lowered.

According to the method provided in this embodiment of the present invention, possible problems of difficulty in configuring self-contained parameters and excessively high overheads resulting from different TTIs of multi-TTI subbands is resolved. In a case of a multi-TTI configuration, UE may implement a method of performing scheduling across subbands, so as to fully use transmission resources. In addition, this embodiment of the present invention further provides a method for configuring a self-contained feedback in a case of a multi-TTI configuration.

The methods provided in this embodiment of the present invention are suitable for a scenario that is across carriers and has various TTIs. That is, in this embodiment of the present invention, a self-contained feedback may be across carriers.

Corresponding to the foregoing method embodiments, an embodiment of the present invention provides a data transmission apparatus for a multi-transmission time interval TTI system. As shown in FIG. 17, the data transmission apparatus includes a generation module 1701 and a transmission module 1702.

The generation module 1701 is configured to generate a data frame including a self-contained self-contained feedback.

The transmission module 1702 is configured to transmit the data frame on a plurality of subbands obtained by dividing one carrier.

At least two of the plurality of subbands have different TTIs.

Parameters of self-contained feedbacks of the at least two of the plurality of subbands are the same, and time lengths of self-contained feedbacks of the plurality of subbands are the same.

With reference to the second aspect, in a first possible implementation of the second aspect, the data transmission apparatus further includes:
the transmission module 1702, further configured to transmit parameter configuration signaling of the self-contained feedback; and
a configuration module 1703, configured to configure a parameter of the self-contained feedback based on the parameter configuration signaling.

Some technical features used in the foregoing apparatus embodiment such as a TTI, a self-contained feedback, a subcarrier interval, a CP, and a GP are similar to or correspond to some technical features used in the foregoing method embodiments, and are not described herein again.

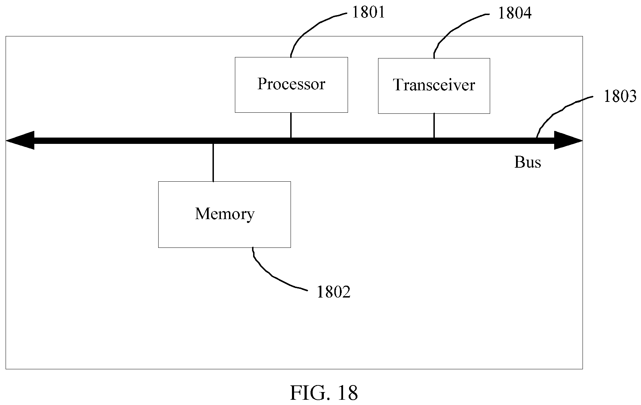

Corresponding to the foregoing method embodiments, as shown in FIG. 18, an embodiment of the present invention provides a data transmission device for a multi-transmission time interval TTI system. The data transmission device includes: a processor 1801, a memory 1802, a transceiver 1804, and a bus 1803. The processor 1801, the memory 1802, and the transceiver 1804 are connected by using the bus 1803 to perform data transmission, and the memory 1802 is configured to store data processed by the processor 1801.

The processor 1801 is configured to generate a data frame including a self-contained self-contained feedback.

The transceiver 1804 is configured to transmit the data frame on a plurality of subbands obtained by dividing one carrier.

At least two of the plurality of subbands have different TTIs.

Parameters of self-contained feedbacks of the at least two of the plurality of subbands are the same, and time lengths of self-contained feedbacks of the plurality of subbands are the same.

With reference to the third aspect, in a first possible implementation of the third aspect, the transceiver is further configured to transmit parameter configuration signaling of the self-contained feedback.

The processor 1801 is further configured to configure a parameter of the self-contained feedback based on the parameter configuration signaling.

Some technical features used in the foregoing apparatus embodiment such as a TTI, a self-contained feedback, a subcarrier interval, a CP, and a GP are similar to or correspond to some technical features used in the foregoing method embodiments, and are not described herein again.

The embodiments of the present invention are described herein. Although the present invention has been described in specific embodiments, it should be understood that these embodiments should not be construed as a limitation on the present invention. Instead, the present invention is explained according to the following claims.

## Claims

1. A data transmission method for a multi-transmission time interval TTI system, comprising:
generating a data frame comprising a self-contained self-contained feedback; and
transmitting the data frame on a plurality of subbands obtained by dividing one carrier, where at least two of the plurality of subbands have different TTIs; and
parameters of self-contained feedbacks of the at least two of the plurality of subbands are the same, and time lengths of self-contained feedbacks of the plurality of subbands are the same.

2. The data transmission method according to claim 1, wherein
the data transmission method further comprises:
transmitting parameter configuration signaling of the self-contained feedback; and
configuring a parameter of the self-contained feedback based on the parameter configuration signaling.

3. The data transmission method according to claim 2, wherein
the parameter configuration signaling carries an index indicating the parameter of the self-contained feedback, wherein different indexes indicate different parameters of the self-contained feedback.

4. The data transmission method according to claim 2 or 3, wherein
the parameter configuration signaling of the self-contained feedback is delivered by using a system broadcast or dedicated configuration signaling or dynamic configuration signaling.

5. The data transmission method according to claim 4, wherein
the dynamic configuration signaling is control signaling of each of the plurality of subbands; and
a parameter of the self-contained feedback of each of the plurality of subbands is separately configured by using control signaling of each of the plurality of subbands.

6. The data transmission method according to any one of claims 1 to 5, wherein
the parameter of the self-contained feedback comprises at least one of the following: a start position, a bandwidth, a configuration interval indication, a reference waveform parameter of the self-contained feedback, and a waveform parameter configuration of a part that is in a symbol whose length is greater than a reference symbol length and that is not occupied by the self-contained feedback.

7. The data transmission method according to any one of claims 1 to 6, wherein
at least two of subbands having a same parameter of the self-contained feedback are adjacent subbands.

8. A data transmission apparatus for a multi-transmission time interval TTI system, comprising:
a generation module, configured to generate a data frame comprising a self-contained self-contained feedback; and
a transmission module, configured to transmit the data frame on a plurality of subbands obtained by dividing one carrier, where
at least two of the plurality of subbands have different TTIs; and
parameters of self-contained feedbacks of the at least two of the plurality of subbands are the same, and time lengths of self-contained feedbacks of the plurality of subbands are the same.

9. The data transmission apparatus according to claim 8, wherein
the data transmission apparatus further comprises:
the transmission module, further configured to transmit parameter configuration signaling of the self-contained feedback; and
a configuration module, configured to configure a parameter of the self-contained feedback based on the parameter configuration signaling.

10. The data transmission apparatus according to claim 9, wherein
the parameter configuration signaling carries an index indicating the parameter of the self-contained feedback, wherein different indexes indicate different parameters of the self-contained feedback.

11. The data transmission apparatus according to claim 9 or 10, wherein
the parameter configuration signaling of the self-contained feedback is delivered by using a system broadcast or dedicated configuration signaling or dynamic configuration signaling.

12. The data transmission apparatus according to claim 11, wherein
the dynamic configuration signaling is control signaling of each of the plurality of subbands; and
a parameter of the self-contained feedback of each of the plurality of subbands is separately configured by using control signaling of each of the plurality of subbands.

13. The data transmission apparatus according to any one of claims 8 to 12, wherein
the parameter of the self-contained feedback comprises at least one of the following: a start position, a bandwidth, a configuration interval indication, a reference waveform parameter of the self-contained feedback, and a waveform parameter configuration of a part that is in a symbol whose length is greater than a reference symbol length and that is not occupied by the self-contained feedback.

14. The data transmission apparatus according to any one of claims 8 to 13, wherein
at least two of subbands having a same parameter of the self-contained feedback are adjacent subbands.

15. A data transmission device for a multi-transmission time interval TTI system, comprising: a processor, a memory, a transceiver, and a bus, wherein the processor, the memory, and the transceiver are connected by using the bus to perform data transmission, and the memory is configured to store data processed by the processor;
the processor is configured to generate a data frame comprising a self-contained self-contained feedback; and
the transceiver is configured to transmit the data frame on a plurality of subbands obtained by dividing one carrier, where
at least two of the plurality of subbands have different TTIs; and
parameters of self-contained feedbacks of the at least two of the plurality of subbands are the same, and time lengths of self-contained feedbacks of the plurality of subbands are the same.

16. The data transmission device according to claim 15, wherein
the transceiver is further configured to transmit parameter configuration signaling of the self-contained feedback; and
the processor is further configured to configure a parameter of the self-contained feedback based on the parameter configuration signaling.

17. The data transmission device according to claim 16, wherein
the parameter configuration signaling carries an index indicating the parameter of the self-contained feedback, wherein different indexes indicate different parameters of the self-contained feedback.

18. The data transmission device according to claim 16 or 17, wherein
the parameter configuration signaling of the self-contained feedback is delivered by using a system broadcast or dedicated configuration signaling or dynamic configuration signaling.

19. The data transmission device according to claim 18, wherein
the dynamic configuration signaling is control signaling of each of the plurality of subbands; and
a parameter of the self-contained feedback of each of the plurality of subbands is separately configured by using control signaling of each of the plurality of subbands.

20. The data transmission device according to any one of claims 15 to 19, wherein
the parameter of the self-contained feedback comprises at least one of the following: a start position, a bandwidth, a configuration interval indication, a reference waveform parameter of the self-contained feedback, and a waveform parameter configuration of a part that is in a symbol whose length is greater than a reference symbol length and that is not occupied by the self-contained feedback.

21. The data transmission device according to any one of claims 15 to 20, wherein
at least two of subbands having a same parameter of the self-contained feedback are adjacent subbands.
